# EUROPÄISCHE PATENTSCHRIFT

(11) **EP 1 543 911 B1**
(45) Veröffentlichungstag und Bekanntmachung des Hinweises auf die Patenterteilung: **23.08.2006**
(21) Anmeldenummer: 04029758.2
(22) Anmeldetag: 16.12.2004
(51) Int. Cl.: B23K 20/10, B29C 65/08, B29C 65/74, F25B 45/00

(54) **Vorrichtung zum fluiddichten Abdichten eines Rohrabschnitts**
Device for fluid tight sealing of tubular sections
Dispositif pour rendre étanche aux fluides une section tubulair à l'aide d'ultrasons

(30) Priorität: 19.12.2003 DE 10360623
(43) Veröffentlichungstag der Anmeldung: 22.06.2005
(73) Patentinhaber: STAPLA Ultraschall-Technik GmbH, 65444 Kelsterbach (DE)
(72) Erfinder: Neis, Dan, 61440 Oberursel (DE)
(74) Vertreter: Stoffregen, Hans-Herbert

(56) Entgegenhaltungen:
- DE-A1- 1 479 511
- DE-A1- 10 210 075
- US-A- 4 517 790
- US-A- 5 606 867
- PATENT ABSTRACTS OF JAPAN Bd. 2003, Nr. 12, 5. Dezember 2003 (2003-12-05) & JP 2003 334669 A (YAZAKI CORP), 25. November 2003 (2003-11-25)

## Beschreibung

Die Erfindung bezieht sich auf eine Vorrichtung zum fluiddichten Abdichten und Trennen eines aus Metall bestehenden Rohrabschnitts mittels einer Ultraschallschweißvorrichtung, umfassend eine Sonotrode mit einer ersten Schweißfläche und eine Gegenelektrode wie Amboss mit einer der ersten Schweißfläche zugeordneten zweiten Schweißfläche sowie ein von der Sonotrode ausgehendes und über der ersten Schweißfläche vorstehendes Trennelement, wobei die erste Schweißfläche in einer quer zur Sonotrodenlängsachse verlaufenden Ebene einen gebogenen Verlauf aufweist.

Bei Geräten und Anlagen der Mess- bzw. Kühltechnik werden Rohre benutzt, die zunächst evakuiert und sodann mit einem Kühlgas befüllt werden. Hierzu werden Rohre mit einer Kupplung verbunden. Nach dem Befüllen muss der kupplungsseitige Abschnitt des Rohres abgetrennt werden. Hierzu ist erforderlich, dass das Rohr, das zu der Anlage bzw. dem Gerät wie Kühlschrank oder Klimaanlage führt, fluiddicht verschlossen wird.

Nach dem Stand der Technik ist ein Verquetschen und Hartlöten bekannt. Auch gelangt eine Klebetechnik zur Anwendung, bei der das befüllte Rohr mit einer Kappe verschlossen wird, die ihrerseits mit dem Rohr verklebt wird.

Sofern ein fluiddichtes Verschließen mittels Hartlöten erfolgt, ist der Nachteil gegeben, dass dann, wenn das Rohr zuvor nicht dicht verquetscht wurde, sich in dem aufzutragenden Lot ein Schlot bildet, der vom aus dem Rohr austretenden Gas durchsetzt wird und somit ein Leck bildet. Unabhängig hiervon kann eine entsprechende Technik nur bei FCKW-Fluiden benutzt werden, da diese nicht brennbar sind.

Heutzutage ist das FCKW weitgehend durch Isobutan ersetzt, das jedoch hochexplosiv ist. Somit ist ein Hartlöten nicht mehr möglich. Daher hat sich das Ultraschallschweißen durchgesetzt, bei dem in einem Arbeitsgang ein Verquetschen und fluiddichtes Verschließen des zunächst evakuierten und sodann mit einem Kühlgas gefüllten Rohres möglich ist.

Bei bekannter Ultraschallschweißvorrichtung zum fluiddichten Verschließen von Rohren gelangen Sonotroden zum Einsatz, die eine erste Schweißfläche aufweisen, neben der ein Schneidelement verläuft. Entsprechend weist die zugeordnete Gegenelektrode - auch Amboss genannt - eine der ersten Schweißfläche zugeordnete zweite Schweißfläche auf, neben der ein dem Schneidelement zugeordnetes Gegenelement wie Kante verläuft.

Aus der WO 03/076116 A1 ist eine entsprechende Ultraschallschweißvorrichtung bekannt, mit der erstmalig die Möglichkeit geschaffen wird; ohne Werkzeugwechsel ein Rohr sowohl rechts als auch links von der Schweißstelle zu durchtrennen. Dabei ist die Schweißfläche der Gegenelektrode eben und die der Sonotrode in Bezug auf die Gegenelektrode konvex gebogen ausgebildet.

Aus der JP 2003 334 669 A ist eine Ultraschallschweißvorrichtung bekannt, mit der von einer elektrischen Isolierung umgebene elektrische Leiter mit einem Träger verschweißt werden. Damit die Isolierung entfernt wird, weist die Sonotrode eine Rippenstruktur mit Freiräumen auf, in die die Isolierung verpresst werden kann. Die Sonotrode zeigt des Weiteren einen konkaven Verlauf, wobei sich dessen Längsachse quer zur Längsachse der Sonotrode erstreckt.

Eine Vorrichtung zum Verschweißen von Kunststoff ist der DE-A-1 479 511 zu entnehmen. In den Bereichen, in denen Kunststoffteile verschweißt werden, sind die entsprechenden Schweißflächen plan ausgebildet.

Um Kunststofffolien zu verschweißen, wird bei der US-A-4,517,790 eine Ultraschallschweißvorrichtung mit einem Amboss benutzt, der im Schnitt kreisabschnittförmige Vorsprünge aufweist, denen ebene Schweißflächen einer Sonotrode zugeordnet sind.

Der vorliegenden Erfindung liegt das Problem zu Grunde, eine Vorrichtung der eingangs genannten Art so weiterzubilden, dass ein sicheres Abdichten des Rohrabschnittes möglich ist.

Erfindungsgemäß wird das Problem dadurch gelöst, dass die erste und die zweite Schweißfläche einen gleich oder im Wesentlichen gleich gebogenen Verlauf aufweisen und dass die zweite Schweißfläche Geometrie einer Rinne besitzt, die sich entlang Längsachse der Sonotrode erstreckt.

Abweichend vom vorbekannten Stand der Technik wird sowohl die Schweißfläche der Sonotrode als auch die der Gegenelektrode bzw. des Ambosses gleichsinnig gebogen ausgebildet, so dass quasi ein formschlüssiges Ineinandergreifen möglich ist. Hierdurch ist insbesondere beim Verschweißen von Rohren der Vorteil gegeben, dass ein optimales Verformen und Verweißen ermöglicht wird, ohne dass Schweißdauer bzw. Anpresskräfte unüblich zu erhöhen sind.

In Weiterbildung der Erfindung wird vorgeschlagen, dass die erste Schweißfläche in Bezug auf die Gegenelektrode einen konvexen Verlauf aufweist, der durch einen Zylinderabschnitt gebildet ist.

Bei Aufeinanderliegen der ersten und zweiten Schweißfläche sollten deren Krümmungsmittelpunkte zusammenfallen oder nahe zusammenfallen.

Besonders gute Schweißergebnisse sind dann erzielbar, wenn Krümmungsmittelpunkte von aufeinander folgenden Abschnitten der ersten und/oder der zweiten Schweißfläche auf einer Mittelpunktgeraden liegen, die parallel oder in etwa parallel zur Sonotrodenlängsachse verläuft. Dabei sollte bei aufeinander liegender erster und zweiter Schweißfläche Mittelpunktgerade der ersten Schweißfläche und Mittelpunktgerade der zweiten Schweißfläche gleich sein oder parallel oder nahezu parallel zueinander verlaufen.

Ist die erste Schweißfläche, also die der Sonotrode insbesondere mit einer glatten oder nahezu glatten Oberfläche versehen, so sollte die der Gegenelektrode entlang ihres rinnenförmigen Verlaufs durch aufeinander folgende Erhebungen strukturiert sein.

Die Erhebungen sollten symmetrisch ausgebildet sein, das heißt, dass die Erhebung durch Flanken begrenzt sind, die symmetrisch zu einer senkrecht zur Längenerstreckung der zweiten Schweißfläche sich erstreckenden Ebene verlaufen. Entsprechend symmetrisch sind auch die die Erhebungen begrenzenden Senken ausgebildet. Die Erhebungen sollten scharfkantig ausgebildete Spitzen aufweisen. Die Flanken können z. B. einen Winkel α mit 5° ≤ α ≤ 20° einschließen.

Auch besteht die Möglichkeit, dass die zweite Schweißfläche mit einer Struktur in Form eines Gewindeabschnitts versehen ist. Eine diesbezügliche Struktur unterscheidet sich von der zuvor erläuterten dahingehend, dass die Symmetrieebene nicht senkrecht zur Längserstreckung der zweiten Schweißfläche, sondern zu dieser geneigt verläuft. Dabei kann der Neigungswinkel β betragen 0° < β ≤ 10°.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsformen.

Es zeigen:
- Fig. 1: eine Prinzipdarstellung einer Vorrichtung zum Abdichten und Trennen eines Rohrabschnitts,
- Fig. 2: eine Vorderansicht eines ersten Ausführungsbeispiels einer Sonotrode mit zugeordnetem Amboss,
- Fig. 3: eine Vorderansicht einer zweiten Ausführungsform einer Sonotrode mit zugeordnetem Amboss,
- Fig. 4: eine der Fig. 2 entsprechende perspektivische Darstellung und
- Fig. 5: einen Ausschnitt der Fig. 4 in vergrößerter Darstellung.

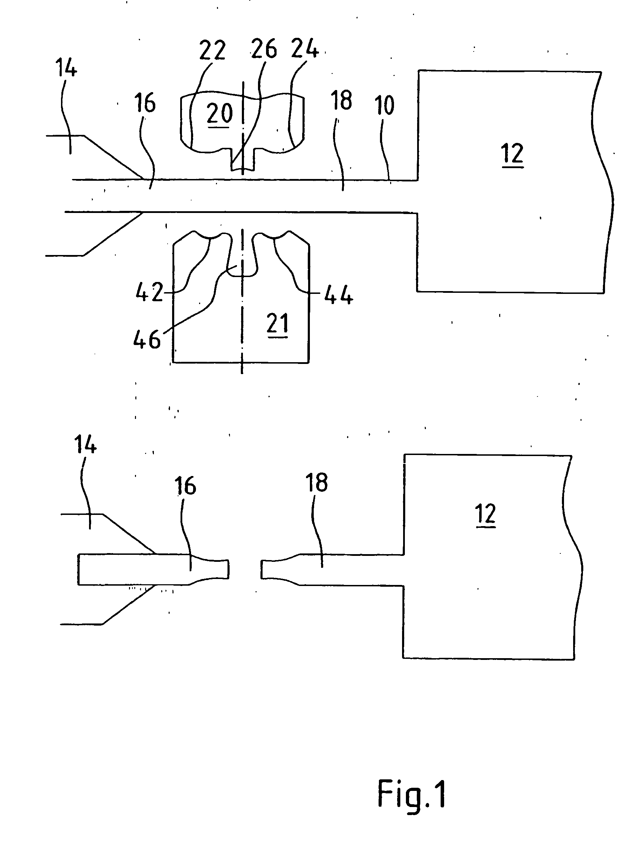

Rohre, die zum Beispiel für Thermofühler, Klimaanlagen oder Kühlschränke benötigt werden, müssen zunächst evakuiert und sodann mit einem Kühlgas befüllt werden. Anschließend ist ein hermetisches Verschließen des Rohres erforderlich. Hierzu wird gemäß der Fig. 1 ein entsprechendes Rohr 10 zum Beispiel eines Kompressors - ohne dass hierdurch die Erfindung eingeschränkt wird - über eine Kupplung 14 mit einer Evakuier- bzw. Gasbefülleinrichtung verbunden. Nach dem Evakuieren des Rohres und Befüllen dieses mit Kühlgas muss sodann das Rohr 10 endseitig fluiddicht verschlossen werden. Gleichzeitig muss der zu der Kupplung 14 führende Abschnitt 16 abgetrennt werden.

Nach der Prinzipdarstellung der Fig. 1 ragt das Rohr 10 links aus dem Kompressor 12 heraus. Es besteht aber auch die Möglichkeit, dass dieses rechts aus dem Kompressor oder einem sonstigen Gerät der Mess- oder Kühltechnik herausragt. Um jedoch unabhängig von der Position des Rohres 10 in Bezug auf die Kupplung 14 oder einen sonstigen Anschluss ein sicheres Abdichten bzw. Verschließen und Abtrennen des Rohres von dem zu dem Kompressor 12 führenden Abschnitt 18 zu ermöglichen, können Sonotrode 20 und zugeordnete Gegenelektrode oder Amboss 21 einer Ultraschallschweißvorrichtung derart ausgebildet sein, dass sich zwei abgedichtete Schweißbereiche ergeben, zwischen denen das Rohr 10, also die Abschnitte 16 und 18 voneinander getrennt werden. Dabei ergibt sich gleichzeitig der Vorteil, dass der zu der Kupplung 14 führende Rohrabschnitt 16 ebenfalls außenseitig fluiddicht verschlossen ist, so dass aufgrund des in der Kupplung 14 herrschenden Überdrucks Gas durch den Rohrabschnitt 16 nicht nach außen strömen kann.

Um die gewünschten zwei zueinander beabstandeten Dichtbereiche auszubilden, weist die Sonotrode 20 zwei zueinander beabstandete Schweißflächen 22, 24 auf, zwischen denen ein Schneidelement 26 verläuft. Die Schweißflächen 22, 24 weisen einen gekrümmt konvexen Verlauf auf und erstrecken sich entlang Längsachse der Sonotrode 20.

Entsprechend der Darstellung Fig. 1 ist die Sonotrode 20 bzw. deren Kopf symmetrisch ausgebildet, so dass demzufolge eine Symmetrie auch in Bezug auf das Schneidelement 26 und die angrenzenden Schweißflächen 22, 24 gegeben ist.

Die der Sonotrode 20 zugeordnete Gegenelektrode 21 - auch Amboss genannt - weist den Schweißflächen 22, 24 der Sonotrode 20 zugeordnete Schweißflächen 42, 44 auf, die erfindungsgemäß einen entsprechend der Geometrie der Schweißflächen 22, 24 gleichsinnigen Verlauf zeigen, also einen konkav gekrümmten Verlauf aufweisen, der sich ebenfalls parallel oder in etwa parallel zur Längsachse der Sonotrode 20 erstreckt.

Zwischen den Schweißflächen 42, 44 des Ambosses 21 verläuft eine kanalartige Längsaussparung 26, die den Amboss 21 in seinen Stirnflächen durchsetzt. Dabei weist die Längsaussparung 46 öffnungsseitig eine geringere Breite als bodenseitig auf. In dem Boden kann des Weiteren eine Vertiefung vorgesehen sein, um beim Schneiden anfallendes Material aufzunehmen.

Dadurch, dass die als erste Schweißflächen bezeichneten Schweißflächen 22, 24 der Sonotrode 20 und die als zweite Schweißflächen bezeichneten Schweißflächen 42, 44 des Ambosses 21 einen gleichsinnig gekrümmten Verlauf aufweisen, ergeben sich insbesondere beim Abdichten und Verschweißen von gekrümmten Metallteilen wie Rohrwandabschnitten besonders gute Schweißergebnisse, da die ersten und zweiten Schweißflächen 22, 24, 42, 46 und die jeweils zwischen diesen verlaufenden zu verschweißenden Metallteile wie Rohrwandabschnitte quasi formschlüssig einander zugeordnet werden.

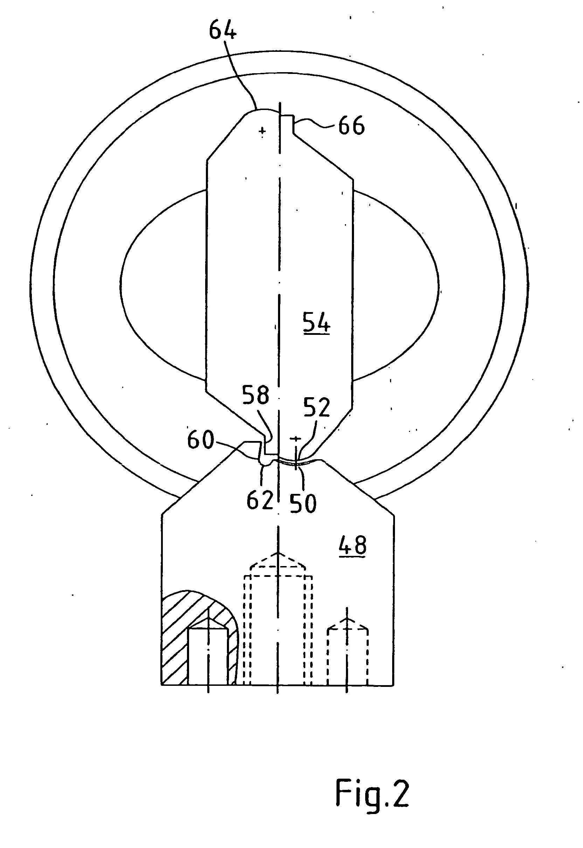

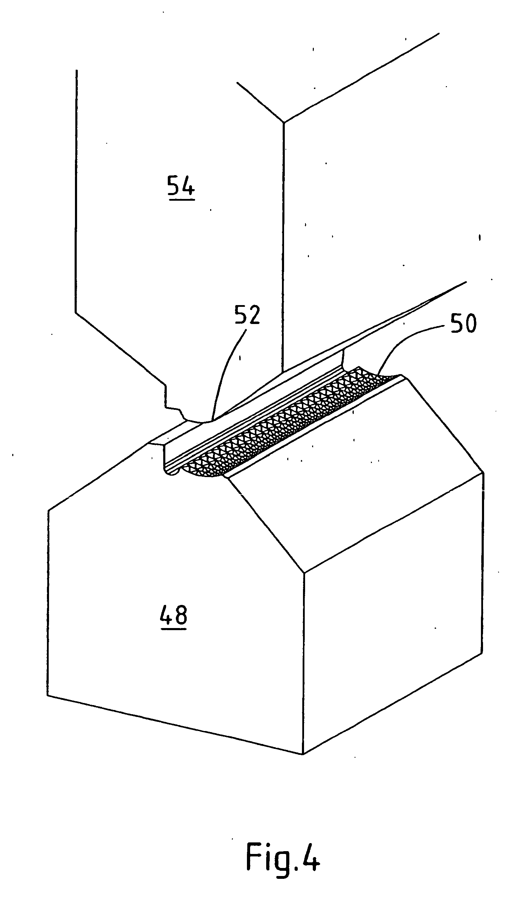

Ist nach dem Ausführungsbeispiel der Fig. 1 die Sonotrode 20 und der Amboss 21 derart ausgebildet, dass zu beiden Seiten des Schneidelementes 26 Schweißflächen 22, 24 bzw. 42, 44 verlaufen, so ist nach dem Ausführungsbeispiel der Fig. 2, 4 und 5 auch eine Gestaltung möglich, bei der ein Amboss 48 nur eine Schweißfläche 50 aufweist und somit dieser jeweils nur eine Schweißfläche 52 einer Sonotrode 54 zuordbar ist.

Unabhängig hiervon weisen die Schweißflächen 50, 52 des Ambosses 48 bzw. der Sonotrode 54 einen gleichsinnig gekrümmten Verlauf auf, so dass dann, wenn die Schweißflächen 50, 52 unmittelbar aufeinanderliegen würden, dem Grunde nach ein formschlüssiges Aufeinanderliegen gegeben ist. Dabei weist die Schweißfläche 50 des Ambosses 48 einen rinnenförmigen Verlauf auf, der sich entlang oder in etwa entlang Längsachse der Sonotrode 54 erstreckt. Entsprechend weist die Schweißfläche 52 der Sonotrode 54 einen in Bezug auf den Amboss 48 konvex gekrümmten Verlauf auf, wobei vorzugsweise die Geometrie eines Zylinderoberflächenabschnitts gegeben ist. Neben der Schweißfläche 52 der Sonotrode 54 erstreckt sich eine Schneidkante 58, der eine Abscherkante 60 des Ambosses 68 zugeordnet ist, um beim Absenken der Sonotrode 54 in Richtung des Ambosses 48 ein zwischen diesen verlaufendes und zu verschweißendes Rohr abtrennen zu können. Des Weiteren ist eine kanalartige Vertiefung zwischen der Abscherkante 40 und der Schweißfläche 60 des Ambosses 48 vorgesehen, um beim Durchtrennen anfallendes Material aufnehmen zu können.

Auch verdeutlicht die Fig. 2, dass die Sonotrode 54, das heißt deren den Ultraschall übertragender Kopf zwei erste Schweißflächen aufweist, nämlich neben der Schweißfläche 52 eine diametral gegenüberliegende Schweißfläche 64 mit zugeordneter Schneidkante 66, so dass durch Drehen der Sonotrode 54 um ihre Längsachse eine der Schweißflächen 52, 64, auf den Amboss 48 und damit dessen Schweißfläche 50 ausrichtbar ist.

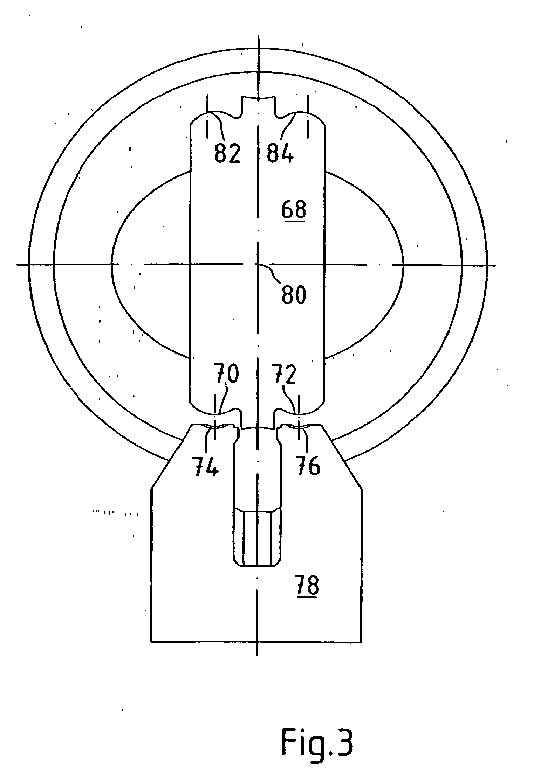

Das Ausführungsbeispiel der Fig. 3 entspricht prinzipiell dem der Fig. 1 dahingehend, als dass von einer Sonotrode 68, das heißt deren Kopf zwei konvex gekrümmt verlaufende Schweißflächen 70, 72 ausgehen, die jeweils einer von zwei Schweißflächen 74, 76 eines Ambosses 78 zugeordnet sind. Dabei sind die Schweißflächen 70, 72, 74, 76, gleichsinnig gekrümmt, um die zuvor erläuterten Vorteile zu erzielen.

Entsprechend der Darstellung gemäß Fig. 2 kann die Sonotrode 48 um ihre Längsachse 80 gedreht werden, um dem Amboss 78 wahlweise ein Paar von zwei Paar Schweißflächen 70, 72 bzw. 82, 84 zuzuordnen. Mit anderen Worten ist die Sonotrode 68 quasi als Wendewerkzeug ausgebildet, das die Schweißflächen 70, 72 und 82, 84 umfasst.

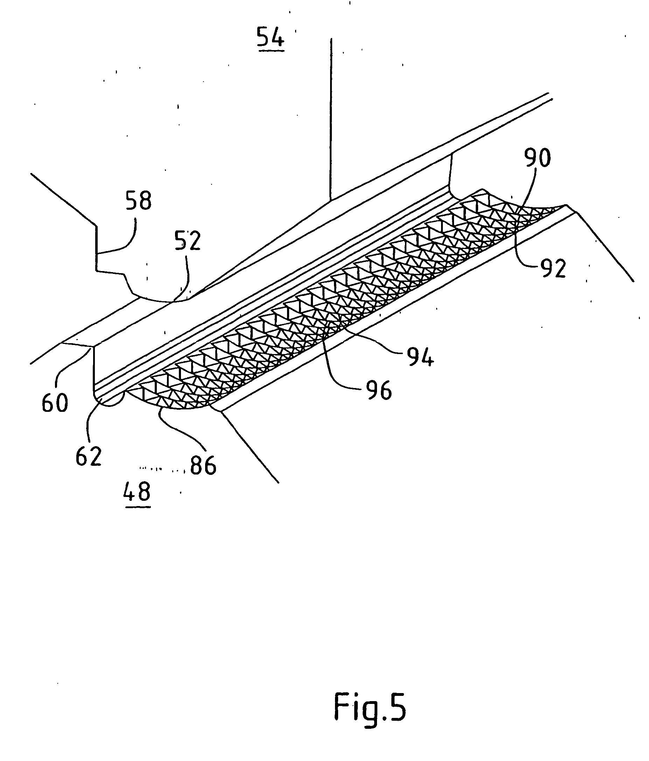

Die Schweißflächen 22, 24, 42, 46, 50, 52, 64, 70, 72, 74, 76, 82, 84 erstrecken sich in Längsrichtung der jeweiligen Sonotrode 20, 54, 68 bzw. deren jeweilige Längsachse 80, wobei die Schweißflächen 22, 24, 52, 64, 70, 72 , 82, 84 der Sonotrode 20, 54, 68 bzw. deren Sonotrodenkopf vorzugsweise unstrukturiert, also oberflächenseitig glatt ausgebildet sind. Demgegenüber weisen die Schweißflächen 42, 44, 50, 74, 76 der jeweiligen Gegenelektrode bzw. des Ambosses 21, 48, 78 eine Struktur auf, die durch aufeinanderfolgende Erhebungen gebildet werden, die sich quer zur Längsachse der Sonotrode 20, 54, 68 erstrecken. Dies ergibt sich rein prinzipiell aus der Fig. 5. In dieser ist in vergrößerter Darstellung die Schweißfläche 50 des Ambosses 48 dargestellt. Man erkennt, dass die Schweißfläche 50 eine rinnenförmige Geometrie mit konkav gebogenem Verlauf zeigt. Die Schweißfläche 50 ist dabei durch aufeinanderfolgende Erhebungen strukturiert, die beispielhaft durch die Bezugszeichen 90, 92, 94, 96 gekennzeichnet sind. Dabei sind die Erhebungen 90, 92, 94, 96 spitz zulaufend ausgebildet und von Flanken begrenzt, die symmetrisch zur Mittelebene der Erhebung 90, 92, 94, 96 verlaufen. Die Flanken können dabei einen Winkel α mit 5° ≤ α ≤ 20° einschließen, ohne dass hierdurch eine Beschränkung der Erfindung erfolgt.

Die Erhebungen 90, 92, 94, 96 erstrecken sich vorzugsweise in Ebenen, die quer zur Längsachse der zugeordneten Sonotrode 54 verlaufen. Gegebenenfalls kann auch eine Neigung zur Längsachse gegeben sein, so dass dem Grunde nach die Struktur durch eine Geometrie gebildet wird, die einem Gewindeausschnitt entspricht.

Aus den Figuren ergibt sich prinzipiell, dass Krümmungsmittelpunkte von aufeinanderfolgenden Abschnitten der ersten und der zweiten Schweißflächen 22, 24, 52, 64, 70, 72, 82, 84; 42, 44, 50, 74, 76 jeweils auf einer Mittelpunktgeraden liegen, die parallel oder in etwa parallel zur Sonotrodenlängsachse 80 verläuft. Dabei sollten bei aufeinanderliegenden ersten und zweiten Schweißflächen 22, 24, 52, 64, 70, 72, 82, 84; 42, 44, 50, 74, 76 die Mittelpunktgerade der ersten Schweißfläche 22, 24, 52, 64, 70, 72, 82, 84 und die Mittelpunktgerade der zweiten Schweißfläche 42, 44, 50, 74, 76, 86 aufeinanderliegen oder parallel oder nahezu parallel zueinander verlaufen.

## Patentansprüche

1. Vorrichtung zum fluiddichten Abdichten und Trennen eines aus Metall bestehenden Rohrabschnitts (16, 18) mittels einer Ultraschallschweißvorrichtung, umfassend eine Sonotrode (20, 54, 68) mit einer ersten Schweißfläche (22, 24, 52, 64, 70, 72, 82, 84) und eine Gegenelektrode (21, 48, 78) oder Amboss mit einer der ersten Schweißfläche (42, 44, 50, 74, 76) zugeordneten zweiten Schweißfläche sowie ein von der Sonotrode ausgehendes und über der ersten Schweißfläche vorstehendes Trennelement (26), wobei die erste Schweißfläche in einer quer zur Sonotrodenlängsachse verlaufenden Ebene einen gebogenen Verlauf aufweist,
**dadurch gekennzeichnet,**
**dass** die erste und die zweite Schweißfläche (22, 24, 42, 44, 50, 52, 64, 70, 72, 74, 76, 82, 84,) einen gleich oder im Wesentlichen gleich gebogenen Verlauf aufweisen und dass die zweite Schweißfläche (42, 44, 50, 74, 76) die Geometrie einer Rinne besitzt, die sich entlang der Längsachse (80) der Sonotrode (20, 54, 68) erstreckt.

2. Vorrichtung nach Anspruch 1,
**dadurch gekennzeichnet,**
**dass** die erste Schweißfläche (22, 24, 52, 64, 70, 72, 82, 84) in Bezug auf die Gegenelektrode (21, 48, 78) einen konvexen Verlauf aufweist, der durch einen Zylinderoberflächenabschnitt gebildet ist.

3. Vorrichtung nach Anspruch 1,
**dadurch gekennzeichnet,**
**dass** bei aufeinander liegenden ersten und zweiten Schweißflächen (22, 24, 42, 44; 52, 70, 72; 74, 76; 86) deren Krümmungsmittelpunkte zusammenfallen oder nahezu zusammenfallen.

4. Vorrichtung nach Anspruch 1,
**dadurch gekennzeichnet,**
**dass** Krümmungsmittelpunkte von aufeinander folgenden Abschnitten der ersten und der zweiten Schweißflächen (22, 24, 52, 64, 70, 72, 82, 84; 42, 44, 50, 74, 76) jeweils auf einer Mittelpunktgeraden liegen, die parallel oder in etwa parallel zur Sonotrodenlängsachse (80) verläuft.

5. Vorrichtung nach Anspruch 1,
**dadurch gekennzeichnet,**
**dass** bei aufeinander liegenden ersten und zweiten Schweißflächen (22, 24, 52, 64, 70, 72, 82, 84; 42, 44, 50, 74, 76) die Mittelpunktgerade der ersten Schweißfläche (22, 24, 52, 64, 70, 72, 82, 84) und die Mittelpunktgerade der zweiten Schweißfläche (42, 44, 50, 74, 76, 86) aufeinander liegen oder parallel oder nahezu parallel zueinander verlaufen.

6. Vorrichtung nach Anspruch 1,
**dadurch gekennzeichnet,**
**dass** die erste Schweißfläche (22, 24, 52, 64, 70, 72, 82, 84) eine glatte oder nahezu glatte Oberfläche aufweist.

7. Vorrichtung nach Anspruch 1,
**dadurch gekennzeichnet,**
**dass** die zweite Schweißfläche (42, 44, 50, 74, 76, 86) entlang deren rinnenförmigen Verlauf durch aufeinander folgende Erhebungen (90, 92, 94, 96) gebildet ist.

8. Vorrichtung nach Anspruch 7,
**dadurch gekennzeichnet,**
**dass** Abstand von aufeinander folgenden Erhebungen (90, 92, 94, 96) gleich oder nahezu gleich ist.

9. Vorrichtung nach Anspruch 7 oder 8,
**dadurch gekennzeichnet,**
**dass** die Erhebungen (90, 92, 94, 96) durch Flanken begrenzt sind, die symmetrisch zu einer sich senkrecht zur Längserstreckung der zweiten Schweißfläche (42, 44, 50, 74, 76) sich erstreckenden Ebene verlaufen.

10. Vorrichtung nach Anspruch 9,
**dadurch gekennzeichnet,**
**dass** die Flanke der Erhebungen (90, 92, 94, 96) einen Winkel α mit 5° ≤ α ≤ 20° einschließen.

11. Vorrichtung nach Anspruch 1,
**dadurch gekennzeichnet,**
**dass** die zweite Schweißfläche (42, 44, 50, 74, 76) eine Struktur und Form eines Gewindeabschnitts aufweist.

## Claims

1. Device for fluid-tight sealing and separation of a pipe section (16, 18) comprising metal by means of an ultrasonic welding device, comprising a sonotrode (20, 54, 68) with a first welding surface (22, 24, 52, 64, 70, 72, 82, 84) and a counter-electrode (21, 48, 78) or anvil with a second welding surface (42, 44, 50, 74, 76) associated with one of the first welding surface, and a separating element (26) extending from the sonotrode and projecting beyond the first welding surface, where the first welding surface has a curved course in a plane running transverse to the sonotrode longitudinal axis,
wherein,
the first and the second welding surfaces (22, 24, 42, 44, 50, 52, 64, 70, 72, 74, 76, 82, 84) have an identically or substantially identically curved course and wherein the second welding surface (42, 44, 50, 74, 76) has the geometry of a groove extending along the longitudinal axis (80) of the sonotrode (20, 54, 68).

2. Device according to Claim 1,
wherein,
the first welding surface (22, 24, 52, 64, 70, 72, 82, 84) has relative to the counter-electrode (21, 48, 78) a convex course formed by a cylinder surface section.

3. Device according to Claim 1,
wherein,
when first and second welding surfaces (22, 24, 42, 44; 52, 70, 72; 74, 76; 86) are one above the other their curvature centre-points coincide or almost coincide.

4. Device according to Claim 1,
wherein,
curvature centre-points of successive sections of the first and second surfaces (22, 24, 52, 64, 70, 72, 82, 84; 42, 44, 50, 74, 76) are each on a centre-point straight line running parallel or approximately parallel to the sonotrode longitudinal axis (80).

5. Device according to Claim 1,
wherein,
when first and second welding surfaces (22, 24, 52, 64, 70, 72, 82, 84; 42, 44, 50, 74, 76) are one above the other, the centre-point straight line of the first welding surface (22, 24, 52, 64, 70, 72, 82, 84) and the centre-point straight line of the second welding surface (42, 44, 50, 74, 76, 86) are one above the other or run parallel or almost parallel to one another.

6. Device according to Claim 1,
wherein,
the first welding surface (22, 24, 52, 64, 70, 72, 82, 84) has a smooth or almost smooth surface.

7. Device according to Claim 1,
wherein,
the second welding surface (42, 44, 50, 74, 76, 86) is formed along its groove-like course by successive raised areas (90, 92, 94, 96).

8. Device according to Claim 7,
wherein,
the spacing of the successive raised areas (90, 92, 94, 96) is equal or almost equal.

9. Device according to Claim 7 or Claim 8,
wherein,
the raised areas (90, 92, 94, 96) are limited by flanks running symmetrically to a plane extending vertically to the longitudinal extent of the second welding surface (42, 44, 50, 74, 76).

10. Device according to Claim 9,
wherein,
the flanks of the raised areas (90, 92, 94, 96) form an angle α of 5° ≤ α ≤ 20°.

11. Device according to Claim 1,
wherein,
the second welding surface (42, 44, 50, 74, 76) has a structure and form of a threaded section.

## Revendications

1. Dispositif d'étanchement aux liquides et de séparation d'une section de tuyau (16, 18) en métal à l'aide d'un dispositif de soudage à ultrasons, comprenant une sonotrode (20, 54, 68) avec une première surface de soudage (22, 24, 52, 64, 70, 72, 82, 84) et une contre-électrode (21, 48, 78) ou enclume avec une seconde surface de soudage associée à l'une des premières surfaces de soudage (42, 44, 50, 74, 76), ainsi qu'un élément de séparation (26) partant de la sonotrode et dépassant de la première surface de soudage, sachant que la première surface de soudage présente un tracé incurvé sur un niveau s'étendant transversalement par rapport à l'axe longitudinal de la sonotrode,
**caractérisé en ce**
**que** la première et la seconde surfaces de soudage (22, 24, 42, 44, 50, 52, 64, 70, 72, 74, 76, 82, 84) présentent un tracé incurvé de manière identique ou pour l'essentiel identique, et que la seconde surface de soudage (42, 44, 50, 74, 76) présente la géométrie d'un sillon s'étendant le long de l'axe longitudinal (80) de la sonotrode (20, 54, 68).

2. Dispositif selon la revendication 1,
**caractérisé en ce**
**que** la première surface de soudage (22, 24, 52, 64, 70, 72, 82, 84) présente en relation avec la contre-électrode (21, 48, 78) un tracé convexe qui est formé par une section de surface de cylindre.

3. Dispositif selon la revendication 1,
**caractérisé en ce**
**que** les centres de courbure de la première et de la seconde surfaces de soudage (22, 24, 42, 44; 52, 70, 72; 74, 76; 86) coïncident ou coïncident pratiquement lorsque ces deux surfaces reposent l'une sur l'autre.

4. Dispositif selon la revendication 1,
**caractérisé en ce**
**que** les centres de courbure des sections successives de la première et de la seconde surfaces (22, 24, 52, 64, 70, 72, 82, 84; 42, 44, 50, 74, 76) se trouvent respectivement sur une droite de centre qui s'étend parallèlement ou pratiquement parallèlement à l'axe longitudinal de la sonotrode (80).

5. Dispositif selon la revendication 1,
**caractérisé en ce**
**que** la droite de centre de la première surface de soudage (22, 24, 52, 64, 70, 72, 82, 84) et la droite de centre de la seconde surface de soudage (42, 44, 50, 74, 76, 86) reposent l'une sur l'autre ou s'étendent parallèlement ou pratiquement parallèlement l'une par rapport à l'autre lorsque la première et la seconde surfaces de soudage reposent l'une sur l'autre (22, 24, 52, 64, 70, 72, 82, 84; 42,44, 50, 74, 76).

6. Dispositif selon la revendication 1,
**caractérisé en ce**
**que** la première surface de soudage (22, 24, 52, 64, 70, 72, 82, 84) présente une surface lisse ou quasiment lisse.

7. Dispositif selon la revendication 1,
**caractérisé en ce**
**que** la seconde surface de soudage (42, 44, 50, 74, 76, 86) est formé le long de son tracé en forme de sillon par des élévations successives (90, 92, 94, 96).

8. Dispositif selon la revendication 7,
**caractérisé en ce**
**que** la distance entre les élévations (90, 92, 94, 96) successives est identique ou quasiment identique.

9. Dispositif selon la revendication 7 ou 8,
**caractérisé en ce**
**que** les élévations (90, 92, 94, 96) sont limitées par des flancs qui s'étendent symétriquement par rapport à un niveau s'étendant verticalement par rapport à l'étendue longitudinale de la seconde surface de soudage (42, 44, 50, 74, 76).

10. Dispositif selon la revendication 9,
**caractérisé en ce**
**que** les flancs des élévations (90, 92, 94, 96) forment un angle α de 5° ≤ α ≤ 20°.

11. Dispositif selon la revendication 1,
**caractérisé en ce**
**que** la seconde surface de soudage (42, 44, 50, 74, 76) présente la structure et la forme d'une section filetée.
